# EUROPEAN PATENT APPLICATION

(11) **EP 0 979 716 A1**
(43) Date of publication of application: **16.02.2000**
(21) Application number: 98830499.4
(22) Date of filing: 11.08.1998
(51) Int. Cl.: B29C 33/34, B29C 33/30

(54) **Moulding machine with mould-transfer device**

(71) Applicant: Fata Aluminium Division of Fata Group S.p.A., 10098 Rivoli (Torino) (IT)
(72) Inventor: Bono, Mario, 10022 Carmagnola (Torino) (IT); Busso, Pierluigi, 10024 Moncalieri (Torino) (IT)
(74) Representative: Bosotti, Luciano

(57) **Abstract**

A moulding machine, particularly for moulding shaped expanded polystyrene bodies, comprises a lower mould- carrying frame (5) and an upper mould-carrying frame. The upper frame is movable between a moulding configuration in which it is close to the lower frame (5) and a manoeuvring configuration in which it is spaced vertically therefrom. Each frame (5) has a seat (7) engageable by the respective half- mould (9a, 9b) as a result of a relative movement between the half-mould and the corresponding mould-carrying frame in a vertical direction. Releasable means (11) for anchoring the half-mould are associated with each seat (7). The machine (1) has a mould-transfer device (13) for moving the mould (9) between a working position in which it engages the lower mould-carrying frame (5) and a raised position in which it is separated vertically from the lower mould- carrying frame (5). Means (15, 28) are present for guiding the mould (9) between the raised position and a collection position spaced horizontally from the raised position and accessible from outside the machine (1).

## Description

The present invention relates to a moulding machine, particularly for moulding shaped expanded polystyrene bodies, comprising a lower mould-carrying frame and an upper mould-carrying frame which is movable between a moulding configuration in which it is close to the lower mould-carrying frame and a manoeuvring configuration in which it is spaced vertically therefrom, in which each mould-carrying frame has a seat engageable by a respective lower or upper half-mould as a result of a relative movement between the half-mould and the corresponding mould-carrying frame in a vertical direction, releasable means being associated with each seat for anchoring the respective half-mould, the half moulds defining, in the coupled condition, a mould which can be opened and can be removed, as a whole, from the machine.

In moulding machines of the known type defined above, the moulds constituted by the pair of upper and lower half-moulds have to be capable of being replaced quite frequently in order to produce shaped bodies of various shapes. However, these moulds are heavy, weighing about a ton, and their replacement therefore requires the operation of transport equipment outside the machine. In other moulding machines, the problem of replacing the mould is solved by the use of moulds which can be opened along a vertical plane so that, in the open configuration, the machine has a vertical space between the mould-carrying frames through which a crane-like lifting member can be introduced to replace the moulds.

However, in a machine of the type which is the subject of the present invention, in which the mould can be opened horizontally and the machine has an opening which extends horizontally, the use of a crane-like lifting member is not possible. Vehicles such as lift trucks are therefore usually used for extracting the mould unit from the space defined between the mould-carrying frames in the open condition and for introducing a new mould into the space. However, this known system is not very practical and, in particular, does not enable the moulds to be introduced into their seat very precisely, risking malfunctioning of and/or damage to the moulding machine.

To prevent these problems, the subject of the invention is a machine of the type defined above, characterized in that it has a mould-transfer device for moving the mould between a working position in which the lower half-mould engages the lower mould-carrying frame, and a raised position in which the lower half-mould is separated vertically from the mould-carrying frame.

By virtue of this concept, the machine according to the invention enables the mould unit to be extracted at least partially when the mould-carrying frames are spaced apart, until the mould unit is brought to a position in which it can easily be gripped or deposited by means of a transport vehicle. In particular, the stage of the engagement of the mould in its seat defined by the lower mould-carrying frame is entrusted entirely to the transfer device which thus places the mould in the machine, locating it in an optimal manner.

The transfer device preferably comprises means for guiding the mould between the raised position and a collection position spaced horizontally from the raised position of the mould and accessible from outside the machine.

As well as being moved away from the lower mould-carrying frame, the mould can thus also be brought to a position in which it is partially extracted from the working region of the machine so as to facilitate the gripping or deposition of the mould by suitably arranged external apparatus.

A further subject of the invention is a mould, particularly for moulding shaped expanded polystyrene bodies, including a lower half-mould and an upper half-mould which can be coupled with one another, characterized in that the lower half-mould comprises running members for cooperating with corresponding horizontal translation elements associated with a moulding machine of the type defined above.

Further characteristics and advantages of the invention will become clearer from the following detailed description, given with reference to the appended drawings, provided purely by way of non-limiting example, in which:
Figure 1 is an elevational view of a lower portion of the machine according to the invention,
Figure 2 is a partially-sectioned side elevational view of the machine of Figure 1, taken on the arrow II of that drawing,
Figures 3 and 4 are similar side elevational views taken on the arrows III and IV of Figure 1, showing respective operative conditions of the machine during a first stage of movement of the mould,
Figure 5 is a side elevational view taken on the arrow V of Figure 1 and relating to the operative condition of Figure 4, and
Figure 6 is a side elevational view of the machine taken on the arrow VI of Figure 1, showing a further operative condition of the machine in which the mould can be moved towards an external transport vehicle.

With reference to the drawings, the basic structure of a moulding machine, particularly for moulding shaped expanded polystyrene bodies, is generally indicated 1. In particular, the machine has a framework 3 supported by legs 4 and supporting a substantially rectangular, lower mould- carrying frame 5 defining a central opening 7.

An upper mould-carrying frame, which is not shown in the drawings since it is similar to the frame 5, is disposed above and vertically aligned with the mould-carrying frame 5. In particular, the upper frame is movable relative to the mould-carrying frame 5 between a moulding configuration in which it is close to the frame 5 and a manoeuvring configuration in which the upper frame is spaced vertically from the frame 5. A mould 9 of the type which can be opened out along a substantially horizontal plane into a pair of half moulds, that is, a lower half-mould 9b and an upper half-mould 9a, can be inserted transversely in the machine 1 between the frame 5 and the upper mould-carrying frame. The half-moulds 9a and 9b are shaped in a manner such that each engages the respective seat defined by the respective mould-carrying frame.

Releasable anchoring means provided for fixing each half-mould 9a, 9b to the corresponding mould-carrying frame are constituted by four pins 11 slidable transversely on each of the mould-carrying frames. The pins 11 can extend inside the seat of the respective mould-carrying frame, reaching a locking position in which they engage respective holes in the respective half-mould, or an extracted release position in which each half-mould can be separated from the corresponding mould-carrying frame as a result of a relative movement in a vertical direction.

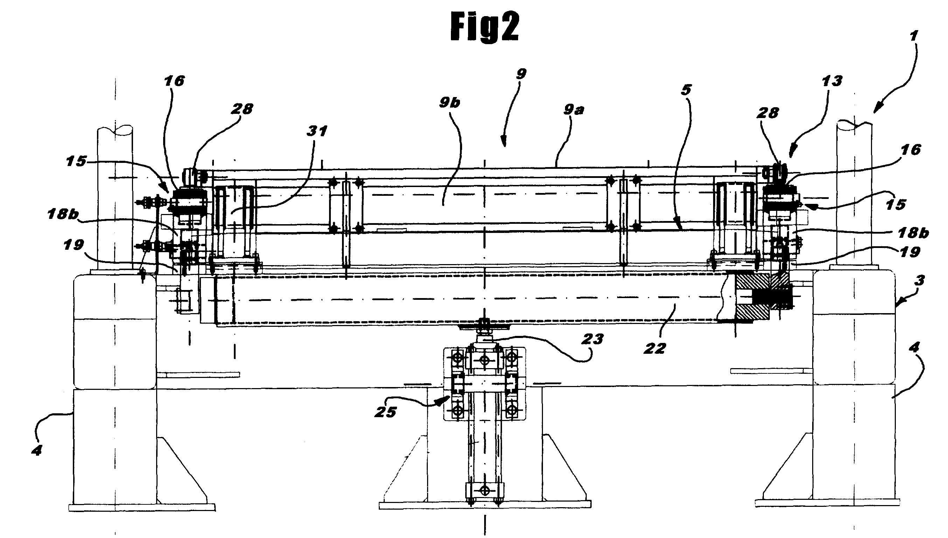

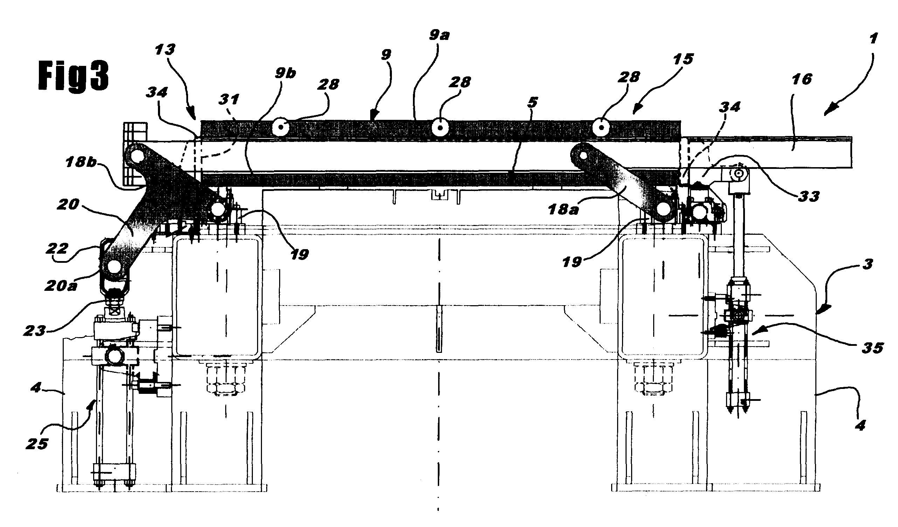

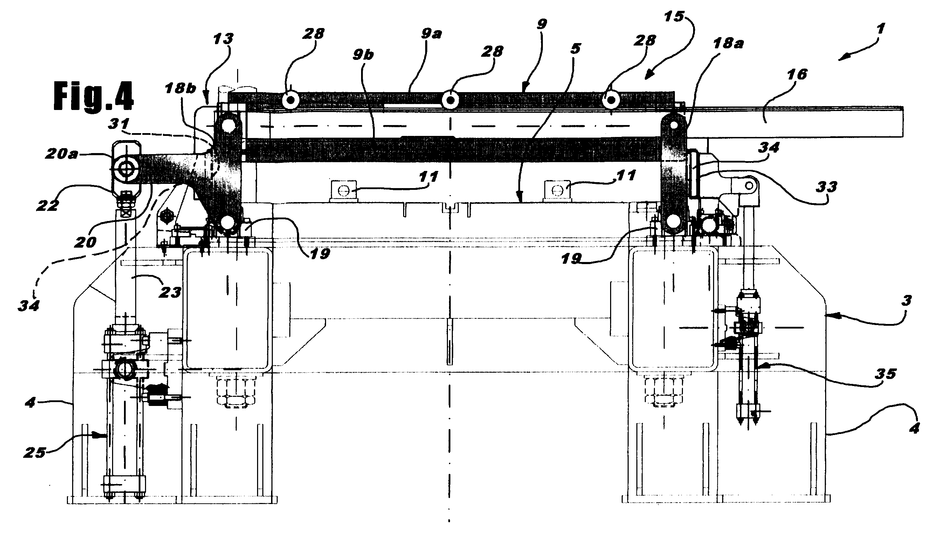

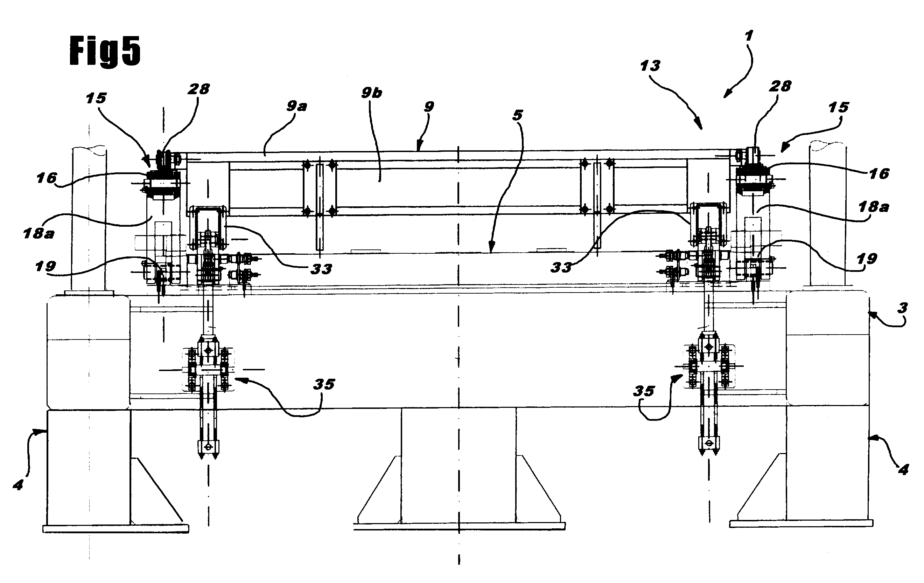

The machine 1 includes a mould-transfer device 13 for moving the mould 9 between a working position (shown in Figures 2 and 3) in which the lower half-mould 9b engages the seat 7, and a position (shown in Figures 4, 5 and 6) in which the mould is raised from the lower mould-carrying frame 5 and in which the half-mould 9b, together with the half-mould 9a, is separated from the frame 5 vertically.

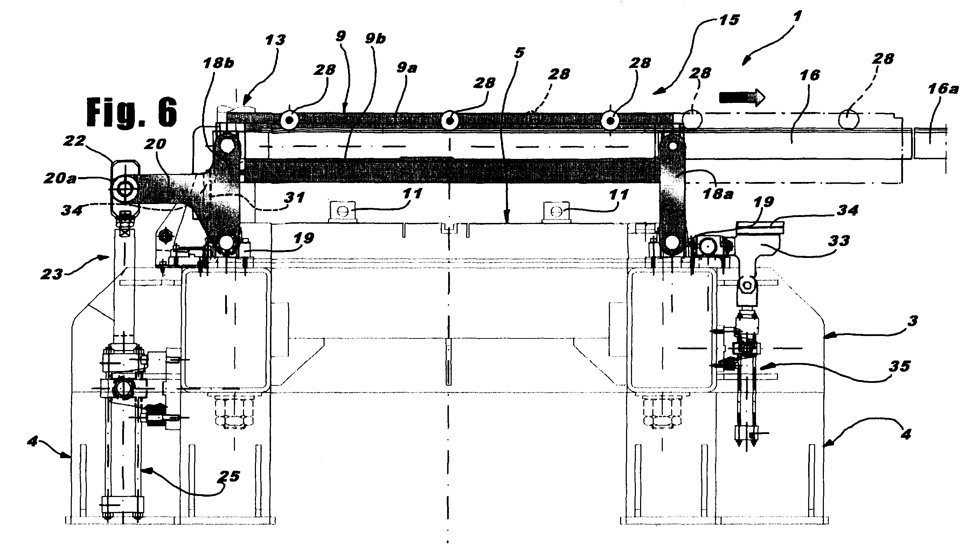

The transfer device 13 preferably enables the mould 9 to be brought, by means of guide members 15, from the raised position to a further, collection position (shown in broken outline in Figure 6) spaced horizontally from the raised position and easily accessible from outside the machine 1.

Each guide member 15 comprises a rail 16 connected to the base 3 of the machine 1 in a position adjacent one of the opposite sides of the lower mould-carrying frame 5 by means of an articulated parallelogram articulation which includes a pair of connecting-rod members 18a, 18b for each rail 16. The members 18a, 18b have respective ends articulated to lugs 19 of the base 3 and to the respective rail 16 so as to be able to pivot relative to the lugs 19 in order to move the respective rail 16 in a manner such that it is always parallel to itself.

The member 18b also has a transverse arm 20 the free end 20a of which is articulated to a horizontal bar 22 connecting the two arms 20 of the connecting-rod members 18b associated with the rails 16. Connected to a central portion of the bar 22 is the end of the rod 23 of a hydraulic cylinder 25 which is supported by the base 3 and by means of which the vertical movement of the bar 22, and consequently of the arms 20 of the connecting-rod members 18b, and hence the simultaneous vertical movement of both rails 16, can be controlled.

Each of the rails 16 can be engaged by a respective series of rollers 28 mounted for rotation on axles supported by the lower half-mould 9b.

On the base 3, the machine 1 has members for the transverse restraint of the mould 9, for allowing the mould 9 to move between the working position and the raised position and at the same time resisting undesired horizontal translations of the mould 9 during this movement. These restraint members comprise a pair of vertical shoulders 31 both fixed to the base 3 on the same side of the mould-carrying frame 5 and, in an opposed position, adjacent the opposite side of the frame 5, a pair of movable shoulders 33 controlled by means of respective hydraulic actuator cylinders 35.

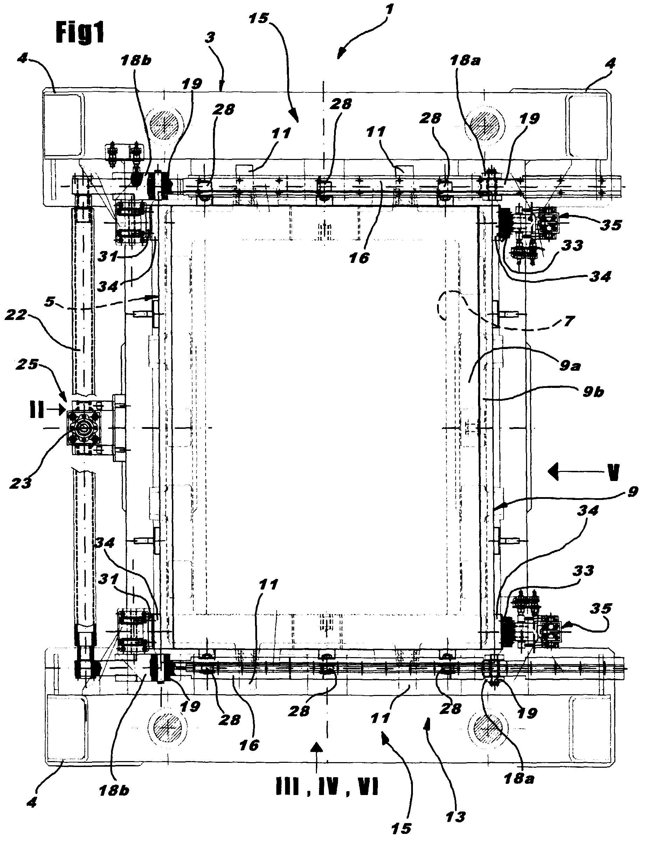

In particular, the shoulders 33 are articulated to the base 3 so as to be movable between an erect position (Figures 1, 3, 4 and 5) in which they interfere with a side face of the mould 9, preventing it from being translated horizontally along the rails 16 between the raised position and the collection position, and a lowered position (Figure 6) in which they are arranged in a configuration closer to the base 3 so as not to interfere with the horizontal translational movement of the mould 9. Both the shoulders 31 and the shoulders 33 advantageously have inserts 34 of anti-friction material such as Teflon or the like on their abutment surfaces which are intended to face the mould 9 so as to favour vertical sliding of the mould 9 relative to the shoulders during the movement of the mould 9 between the working position and the raised position.

In operation, the moulding stage takes place in the machine 1 with the mould 9 in the condition in which the half-moulds 9a, 9b are coupled, in which the upper mould-carrying frame and the lower mould-carrying frame 5 are in the close-together configuration, the anchoring devices 11 being activated in order to fix each half-mould to the respective mould-carrying frame.

The locking means 11 of the upper half-mould are then de-activated in order to render the upper half-mould separable from the respective mould-carrying frame.

The upper movable portion of the machine 1, particularly the upper mould-carrying frame, can then be raised so that the mould 9 engages solely the lower mould-carrying frame 5. In this configuration, the locking devices 11 of the frame 5 are released. The cylinder 25 is then activated so as to bring the rails 16 from their position adjacent the base 3 to a raised position as a result of pivoting of the connecting-rod members 18a, 18b. During this movement, all of the fixed shoulder members 31 and the movable shoulder members 33 are in the erect position so as to resist horizontal translations of the mould 9. In particular, as a result of the pivoting of the connecting-rod members 18a, 18b, the rails 16 are moved along an arcuate path so that they reach a final position in which they are displaced both vertically and horizontally from their initial position. During this movement of the rails 16, the rollers 28 rotate on the rails 16 to compensate for the horizontal movement thereof so that the mould 9 undergoes a purely vertical movement between the working position and the raised position.

When the mould 9 has reached the raised position, the movable shoulder members 33 can be lowered by operation of the cylinders 35, so that the mould 9 can be moved from the raised position to the collection position as a result of a horizontal translation along the rails 16. This translation is preferably controlled manually by an operator and is made possible, in spite of the relatively large weight of the mould 9, because of the low rolling friction generated by the running of the rollers 28 on the rails 16.

Shortly prior to the manual operation to move the mould 9 from its raised position to its collection position, an operator vehicle (not shown in the drawings) is normally brought to the side of the mould-carrying frame 5 on which the movable shoulders 33 are mounted in order to remove the mould 9 from the machine 1. This vehicle, for example, a lift truck, has a front structure provided with centering means for coupling correctly with the machine 1 in a space in the base 3 defined between the legs 4 on the side having the movable shoulders 33, that is, the side on which the moulds of the machine are manoeuvred, so that the forks of the truck, which have rail sections 16a (see Figure 6) of a shape corresponding to that of the rails 16, constitute extensions of these rails 16. The mould 9 can thus be moved until it engages the rails 16a of the lift truck so that it can be removed completely from the machine 1.

In order to insert a new mould in the machine 1, substantially the same operations necessary to remove the mould 9 are repeated in reverse sequence. A new transport truck carrying a new mould 9 approaches the machine 1 until it engages the reference space defined between the legs 4 on the side having the movable shoulders 33, in particular, bringing its rails 16a adjacent the free ends of the rails 16. The mould 9 is pushed onto the rails 16 until its side facing away from the truck abuts the fixed shoulder members 31. The cylinders 35 are then operated so as to bring the shoulders 33 from the lowered position to the erect position so as to stop any possible horizontal movement of the mould 9 along the rails 16. At this point, the cylinder 25 is operated in order to pivot the connecting-rod members 18a, 18b so as to lower the rails 16 until they bear on the base 3. In this configuration of the transfer means 13, the new mould 9 is disposed precisely in the seat 7 defined in the lower mould-carrying frame 5. The upper mould-carrying frame can then be lowered until it engages the upper half- mould 9a of the mould 9 and the locking means 11 can then be operated so as to fix the half-moulds 9a, 9b of the mould 9 to the respective mould-carrying frames of the machine 1 which is then ready for a new moulding stage.

## Claims

1. A moulding machine, particularly for moulding shaped expanded polystyrene bodies, comprising a lower mould-carrying frame (5) and an upper mould-carrying frame which is movable between a moulding configuration in which it is close to the lower mould-carrying frame (5) and a manoeuvring configuration in which it is spaced vertically therefrom, in which each mould-carrying frame (5) has a seat (7) engageable by a respective lower or upper half-mould (9b, 9a) as a result of a relative movement between the half-mould (9a, 9b) and the corresponding mould-carrying frame (5) in a vertical direction, releasable means (11) being associated with each seat (7) for anchoring the respective half-mould (9a, 9b), the half-moulds (9a, 9b) defining, in the coupled condition, a mould (9) which can be opened and can be removed as a whole from the machine (1),
characterized in that the machine has a mould-transfer device (13) for moving the mould (9) between a working position in which the lower half-mould (9b) engages the lower mould-carrying frame (5) and a raised position in which the lower half-mould (9b) is separated vertically from the lower mould-carrying frame (5).

2. A moulding machine according to Claim 1, characterized in that the transfer device (13) comprises means (15) for guiding the mould (9) between the raised position and a collection position spaced horizontally from the raised position of the mould (9) and accessible from outside the machine (1).

3. A moulding machine according to Claim 2, characterized in that the guide means (15) include a pair of horizontal translation elements (16) which are movable between a lowered position and a raised position, are associated with respective opposite sides of the lower mould-carrying frame (5), and can cooperate with running members (28) associated with the lower half-mould (9b).

4. A moulding machine according to Claim 3, characterized in that each horizontal translation element comprises a rail (16) connected to the lower mould-carrying frame (5) by means of an articulated parallelogram articulation, the rail (16) being engageable by a plurality of rollers (28) supported for rotation by the lower half-mould (9b) of the mould (9).

5. A moulding machine according to Claim 4, characterized in that each articulated parallelogram articulation includes a pair of connecting-rod members (18a, 18b) the opposite ends of which are articulated, respectively, to a portion (19) of the machine (1) adjacent one side of the lower mould-carrying frame (5) and to a respective rail (16), one of the connecting-rod members (18b) having a drive arm (20) connected to actuator means (25) for controlling the movement of the rail (16) between the lowered position and the raised position.

6. A moulding machine according to Claim 5, characterized in that both of the rails (16) are driven simultaneously by a single actuator cylinder (25) by means of a bar (22) connected to the drive arms (20) of both of the articulated parallelogram articulation devices (13).

7. A moulding machine according to any one of Claims 2 to 6, characterized in that it comprises means (31, 33) for the transverse restraint of the mould (9), for allowing the mould (9) to move between the working position and the raised position but simultaneously resisting horizontal translation of the mould (9) during the movement of the transfer means (13) between the lowered position and the raised position, the restraint means comprising shoulder members (33) movable between an erect position in which horizontal translation of the mould (9) is prevented and a lowered position in which horizontal translation of the mould (9) towards the collection position by means of the guide means (15) is permitted.

8. A moulding machine according to Claim 7, characterized in that each transverse restraint means (31, 33) has an abutment surface which can be disposed beside the mould (9) and which has inserts (34) for favouring vertical sliding of the mould (9) relative thereto.

9. A moulding machine according to Claim 7 or Claim 8, characterized in that the position of the movable shoulder members (33) is controlled by means of a respective actuator cylinder (35).

10. A mould, particularly for moulding shaped expanded polystyrene bodies, including a lower half-mould (9b) and an upper half-mould (9a) which can be coupled with one another, characterized in that the lower half-mould (9b) comprises running members (28) for cooperating with corresponding horizontal translation elements (16) associated with a moulding machine (1) according to any one of Claims 1 to 9.

11. A mould according to Claim 10, characterized in that the running members include two sets of rollers (28) rotatable on axles coplanar with one another and fixed to the lower half-mould (9b), each set of rollers (28) being able to engage for running on a respective rail (16).
